Europäisches Patentamt

European Patent Office

Office européen des brevets

(19)

(11) **EP 1 443 725 A1**

(12) **EUROPEAN PATENT APPLICATION**

(43) Date of publication:
**04.08.2004 Bulletin 2004/32**

(51) Int Cl.$^7$: **H04L 27/18**, H04L 1/00

(21) Application number: **03425059.7**

(22) Date of filing: **03.02.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO**<br><br>(71) Applicant: **Urmet Sistemi S.p.a.**<br>**00128 Roma (IT)**<br><br>(72) Inventors:<br>• **Ragozini, Arturo**<br>  **80127 Napoli (IT)** | • **Renno, David**<br>  **00142 Roma (IT)**<br>• **Giusto, Roberto**<br>  **00012 Guidonia (Prov. Roma) (IT)**<br><br>(74) Representative: **Spandonari, Carlo, Dr. Ing.**<br>  **Spandonari & Modiano s.r.l.**<br>  **corso Duca degli Abruzzi 16**<br>  **10129 Torino (IT)** |

(54) **Method and apparatus for encoding and decoding trellis modulated data with hyper-cubic constellations**

(57)    The method for encoding and decoding hyper-cubic trellis coded modulated (TCM) data resorts to a standard Viterbi co-processor (VCP) for binary convolutional codes (BCC). At the transmitter input, information bits are split into two sets, the former encoded by a BCC encoder, the latter left uncoded. The code-word constellation is partitioned in subsets. The encoder output determines the subset by selecting its barycenter, while the uncoded bits determine the code-word within the selected subset. The decoder estimates the information bits from the sequence of received noisy vectors and implements the optimal maximum likelihood (ML) Viterbi receiver for the presented family of hyper-cubic TCM's resorting to a standard VCP for BCC's. VCP's for BCC's are widespread, low-cost standard devices. Ad-
ditional processing, required to map hyper-cubic TCM branch metrics into BCC branch metrics, involves only bitwise operations and sums. The family of TCM schemes for which the presented decoding technique is optimal, is characterized by an integer number, say h, of uncoded bits per real dimension, by a rational number, $k/n$, of coded bits per real dimension, where n represents the dimension of the symbol vectors in the constellation, by an $n$-dimensional hyper-cubic constellation of real symbol vectors with $2^{h+1}$ equally spaced points per edge, by a partition of such constellation in $2^n$ hyper-cubic subsets, each one comprising $2^h$ equally spaced points per edge. The family of the presented hyper-cubic codes offers, for large $n$ and $k = n-1$, an asymptotic coding gain of 6dB and a limit efficiency (least upper bound) of $2h + 2$ bit per complex line symbol.

Fig. 2

**Description**

**BACKGROUND OF THE INVENTION**

*Field of the Invention*

The present invention relates to data communications and deals with a new low-complexity method and apparatus for encoding and decoding hyper-cubic trellis modulated data.

*Description of the Related Art*

Coded modulations aim to improve the bit error rate (BER) under bandwidth constrains for fixed signal to noise ratio (SNR) resorting to both bandwidth expansion and constellation expansion. Bandwidth expansion increases the number of signal dimensions per bit allowed in the design of signal constellations. For an assigned bandwidth, bandwidth expansion involves a reduction of the useful bit rate. Constellation expansion increases the minimum Euclidean distance among modulated symbols at the expense of a power penalty. Dealing with coding and modulation as an unique operation allows to achieve, for a given bandwidth, a *coding gain* exceeding the loss due to the expansion of the signal set.

For a coding scheme, the coding gain is defined as the reduction in the transmitted energy per bit, $E_b$, with respect to an uncoded modulation with the same spectral efficiency (measured in bit/s/Hz or in bit per dimension) at a given BER. At SNR levels of practical interest, errors mainly occur when receiver confuses two closest signals. For a given level of transmitted power $P$, we wish to maximize the squared minimum distance $\delta^2$ among allowed signals. Thus, the quantity $\delta^2/P$ is customarily referred to as *constellation figure of merit* (CFM) and used to compare different coding schemes with equal spectral efficiency. The *asymptotic coding gain* (ACG) is defined as the ratio between the CFM of the coded modulation under examination and an uncoded modulation with the same spectral efficiency.

A (multidimensional) trellis coded modulation (TCM) encoder comprises a BCC (binary convolutional code) encoder and a memoryless (multidimensional) mapper. The input bits are split into two sets, $k$ bits being fed to the BCC encoder, the remaining $h \cdot n$ bits being left uncoded. The $n$ bits at the binary coder output and the $h \cdot n$ uncoded bits are passed to the $n$-dimensional symbol mapper. Within a given bandwidth, by using TCM as originally proposed by Ungerboeck (see Ungerboeck G., "Channel Coding with Multilevel/Phase Signal", *IEEE Trans. Inform. Theory,* vol. IT-28, pp. 55-67, January 1982; Ungerboeck G., "Trellis-Coded Modulation with Redundant Signal Sets", Pts. I and II *IEEE Comm. Magazine,* vol. 25, pp. 5-21, January 1987), it is possible to achieve an ACG of up to 6 dB by use of a BCC of rate $(n-1)/n$ (i.e. doubling the system set). The TCM encoder shares the same number of states of the BCC encoder, which is characterized by a triplet of parameters $(n, k, K)$. In a BCC encoder the current output ($n$ digits) depends on the current input ($k$ digits) and on the past $(K-1)k$ bits stored in the encoder registers. Hence, the encoder has $2^{k(K-1)}$ possible different states. The parameter $K$ is called *constraint length,* and $k/n$ represents the *coding rate.*

The decoder, given the whole sequence of received noisy n-tuples, computes the likelihood of each path of encoder state transitions and returns the input sequence corresponding to the most likely path. Owing to the gaussian nature of the channel noise, likelihood maximization is equivalent to minimizing Euclidean distances among allowed sequences and received signal. In BCC's, the energy of all code-words is constant: hence, minimization of the Euclidean distance is equivalent to maximizing the correlation among code-words and received signal. Moreover, due to the symmetric structure of BCC code-words, only half of those correlations need to be computed, whereas the computation requires only sum/subtract operations. For this reason, a class of commercial BCG Viterbi coprocessors (VCP) provide, as an embedded function, the computation of the correlation metrics from $n$-tuples of received noisy symbols. Other equivalent commercial VCP's expect as input a suitable subset of correlations, sufficient to produce the remaining metrics by exploiting code-word symmetry.

The Viterbi algorithm consists of a computationally efficient method of updating, n-tuple by $n$-tuple, the likelihood of the best $2^{k(K-1)}$ paths of state transitions ending in different states. Once the whole transmitted sequence has been received, the most likely state transition path (i.e. with maximum correlation) is selected, and its corresponding input sequence is returned.

In most practical applications, the allowed decoding delay has to be much shorter than the transmission duration; moreover, the memory required to store the full length of surviving paths grows with the transmission duration and can be very large and expensive. For this reason *trace-back* is introduced. Only the most recent $N_{TB}$ $k$-tuples of each surviving path in the state trellis are retained. At each step (reception of a new channel symbol), a final decision is made on the $k$-tuple estimated $N_{TB}$ steps back in the trellis. By comparing the metrics of the surviving paths at current time, the $k$-tuple belonging to the best sequence is selected and output. The path memory depth $N_{TB}$ (trace-back length) has to be sufficiently long to guarantee a negligible performance degradation with respect to the optimum Viterbi algorithm; for a rate 1/2, code $N_{TB}$ is typically chosen equal to $5 \cdot K$ (see e.g. Proakis J. G., "Digital communications", *Fourth Edition, Mc Graw Hill,* 2001. § 8.2.2).

The Viterbi BCC decoder requires computational resources proportional to $2^{k(K-1)}$, number of encoder states, and memory proportional to $N_{TB} \cdot 2^{k(K-1)}$, number of inputs associated to the paths in evaluation. Even for $k = 1$, owing to the exponential growth of the number of states, constraint lengths $K > 9$ can turn out to be too complex for implementing the decoder as a parallel architecture on a single VLSI device. Among the convolutional coding schemes, the scheme with coding rate 1/2 and $K = 7$ has become one of the most popular. In the article of Viterbi A. J., Wolf J. K., Zehavi E., Padovani R., "A Pragmatic Approach to Trellis-Coded Modulation", *IEEE Comm. Magazine,* pp. 11-19, July 1989, a number of TCM schemes are presented that are based on this *de facto* standard encoder (with puncturing) in parallel with uncoded bits, whose performance turns out to be close to the coding gains of the Ungerboeck schemes *(op. cit.),* where *ad hoc* BCC and no uncoded bits were used.

An inherent cost of these two-dimensional TCM schemes is that, using BCC with rate $(n$-1$)/n$, the constellation size is doubled over the corresponding uncoded scheme. Without this power penalty, the coding gain would be 3dB greater. Resorting to multidimensional constellations can reduce this cost, as only a fraction of this extra bit insists in each two-dimensional signaling interval (see e.g. Wei L.-F., "Trellis-Coded Modulation with Multidimensional Constellations", *IEEE Trans. Inform. Theory,* vol. IT-33, pp. 483-501, July 1987). A simple method for designing multidimensional constellations consists in choosing, from an $n$-dimensional lattice, the points lying within a finite region (sublattice). A number of properties of TCM based on lattice constellations, depending on lattice density, shape of the region and shape and number of subsets is presented in Forney G. D. Jr., Wei, L.-F., "Multidimensional constellations. I. Introduction, figures of merit, and generalized cross constellations", *IEEE Journal on Selected Areas in Communications,* vol. 7, n. 6, pp. 877-892, August 1989. Although hyper-cubic constellations from hyper-cubic lattices appear not to be optimal (e.g. outperformed by hexagonal lattices in spherical regions), their relative performance improves with the number of employed dimensions (lower number of nearest neighbors, - *kissing number* equal to $2n$). In DSP implementations the use of TCM schemes has generally been limited to low speed applications. With VLSI implementation, encoding and decoding TCM at high data rate becomes possible at the cost of developing a device customized for the specific TCM scheme selected. When multi-rate is required, different modulation schemes can require different *ad hoc* developments. Flexibility, reuse of simple blocks, low computational complexity have become major requirements in projects for commercial communications in order to reduce both final cost and design time. On the other side, simple BCC Viterbi decoders are widely available as commercial VLSI, either as standard VHDL cells, or embedded in other devices (e.g. the VCP in the DSP TMS320C6416 from Texas Instruments, which, for coding rates 1/2, offers programmable constraint lengths from 5 to 9). On this subject, see Texas Instruments Incorporated, "Viterbi Decoder Coprocessor User's Guide", *SPRU533,* May 2001, or Nikolic-Popovic J., Texas Instruments Incorporated, "Using TMS320C6416 Coprocessors: Viterbi Coprocessor (VCP)", *Application Report SPRA750,* June 2001.

## SUMMARY OF THE INVENTION

It is the main object of the present invention to provide a new method for encoding and decoding a family of hyper-cubic TCM, which achieves, for a given coding efficiency, a lower computational complexity than known methods.

It is another object to provide the above method so that it seamlessly scales to high transmission efficiencies without changes in the apparatus architecture and without loss of coding gain.

It is a further object of the invention to provide a decoder for implementing the above method, which is equivalent to the optimal maximum likelihood decoder, which has a low computational cost, and which, more particularly, uses a standard BCC VCP.

The proposed decoding method exploits the hyper-cubic structure of subsets and constellations in order to univocally map subset metrics into the coordinate space expected by the BCC VCP. The mapping presents computational complexity linearly growing with n, number of employed real dimensions, and requires only bitwise operations and sums. More efficient constellations, even counting on simplified algorithms for the computation of subset metrics (see e.g. Wei L.-F., *op. cit.),* scale with difficulty to high dimensionalities and require *ad hoc* branch metric computations and Viterbi coprocessors.

The family of the proposed hyper-cubic codes can offer, for large $n$ and $k = n$ - 1, an ACG up to 6dB and a limit efficiency (least upper bound) of $2h$ + 2 bit per complex line symbol.

The invention achieves the above and other objects and advantages, such as will appear from the following specification, by a method for encoding and decoding TCM data having the features recited in claim 1.

The invention also contemplates a decoder for implementing the above method, which has the features recited in claim 5.

The remaining claims point out other advantageous, though non-essential, features of the invention.

**BRIEF DESCRIPTION OF THE DRAWINGS**

Preferred embodiments of the invention will now be described in more detail, with reference to the attached drawings, given by way of examples, wherein:

Fig. 1 is an exemplary block diagram of a TCM encoder according to the prior art;
Fig. 2 is a block diagram of a hyper-cubic TCM encoder incorporating the method of the invention;
Fig. 3 is a block diagram of the implementation of the hyper-cubic TCM decoder according to the invention.

**DETAILED DESCRIPTION OF THE PREFERRED EMBODIMENTS**

The presented technique is a new low-complexity method for encoding and decoding hyper-cubic TCM data able to scale to a wide range of transmission efficiencies and coding gains. The proposed TCM scheme is based on a standard (possibly punctured) BCC of parameters $(n, k, K)$ and on a scalar ASK (amplitude shift keying) mapper/demapper used on each symbol dimension. Owing to the structure of the code, symbol dimensionality coincides with $n$, code-word dimension of the BCC. The number of uncoded bits per real dimension, $h$, determines the number of ASK levels, $2^h$, of the scalar mapper/demapper.

At the TCM encoder, $m = k + h \cdot n$ information bits are coded in an n-dimensional real symbol, $\mathbf{s} \in L = S^n$, where we have set:

$$S = \{2\,(i\text{-}2^h)+1 \text{ with } i = 0,1,...,2^{h+1}\text{-}1\ \}.$$

Constellation $L$ results partitioned into $2^n$ hyper-cubic subsets, each one obtained as the translation of an $n$-dimensional sub-lattice with $2^h$ equispaced points per edge. For the sake of simplicity, the minimum Euclidean distance between points has been arbitrarily fixed to 2 in $L$ and, as appears in the following, to 4 in its subsets (obviously, a different scaling factor will not affect the code performance or the decoding architecture). The first $k$ bits feed a BCC encoder (coded bits). The $n$ resulting bits determine an active subset through a subset selector. The $h \cdot n$ input bits left uncoded determine which point of the subset has to be generated through a point selector. Subsets are selected by determining their respective barycenters, while points in the subsets are selected by determining their corresponding points in the parent sub-lattice with $2^h$ equispaced points per edge. Subset and point selectors are detailed in the following subsection and consist in memoryless operations, thus, the state of the TCM encoder coincides with that of the BCC encoder, which is characterized by $2^{k(K-1)}$ states.

Couples of components of the encoded n-vectors are transmitted as complex line symbols, (thus, with channel efficiency $2h+2k/n$ bit/sec/Hz) over an additive white gaussian channel (AWGN), are demodulated by the receiver and are presented in stacks to the TCM decoder as n-vectors of real received data.

The decoder implements an optimal maximum likelihood (ML) estimator for TCM data resorting to a standard BCC VCP. Without loss of generality, we focus on the case where the correlation metrics are computed by the BCC VCP itself, by correlating each allowed binary n-tuple with the current n-vectors at its input. At each step, the BCC VCP computes the branch metrics, updates the path metrics, selects the best $2^{k(K-1)}$ paths and provides the $k$-tuple $N_{TB}$ steps back in the trellis corresponding to the path with maximum correlation. In order for the BCC VCP to estimate the sequence of coded bits, its input is suitably produced by a coordinate mapper by processing the n-vectors of stacked received components. As a byproduct, the coordinate mapper produces a sequence of quantized received data on $2^{h+1}$-1 levels. Quantized received data, together with the sequence of active subsets (obtained by re-encoding the coded bits estimated) allows the estimation of the uncoded part of the bit stream.

The proposed method maps monotonically the likelihood of each path of state transitions accumulated by an ideal Viterbi algorithm for TCM into the path correlation metrics accumulated by the standard BCC VCP.

Both the coordinate mapper and the external processing involve only bitwise and sum/subtract operations and lend themselves to high speed low-complexity implementations both for DSP's with, possibly embedded, VCP's and for VLSI by means of a standard binary Viterbi decoder macro-cell.

*Hyper-cubic TCM encoder*

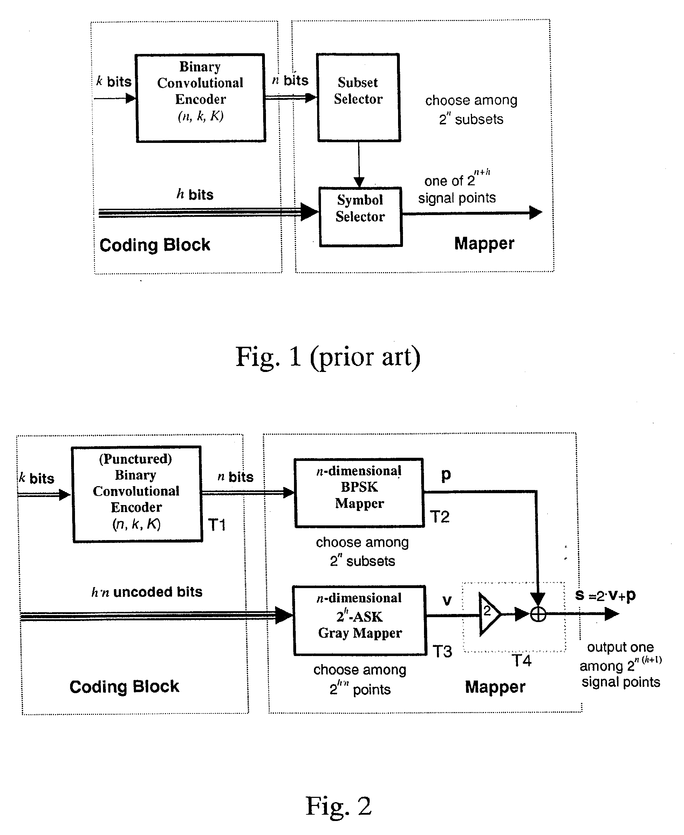

Fig. 1 shows a general (multidimensional) TCM encoder where $m = k + h$ information bits are coded in complex symbols from a constellation of $2^{n+h}$ points. The first $k$ bits feed a BCC encoder with $2^{k(K-1)}$ states. The $n$-tuple in output determines, through a subset selector, one of the $2^n$ subsets in which the constellation is partitioned. The $h$ uncoded bits feed a symbol selector that produces the corresponding point of the active subset. The scheme applies also to multidimensional encoders, where the symbol selector produces constellation vectors of real or complex values.

Referring to Fig. 2, a specific example of multidimensional TCM encoder is presented where $m = k + n \cdot h$ information bits are encoded in real vectors belonging to an $n$-dimensional hyper-cubic constellation of $2^{n(h+1)}$ points. The processing of Fig. 2 is defined as follows: the first $k$ input bits (coded bits) feed the BCC encoder (module T1) whose output is mapped (module T2) in a binary $n$-vector, $\mathbf{p} \in \mathcal{P} = \{1, -1\}^n$. The rate $k/n$ BCC encoder can be realized by puncturing a lower rate encoder. The remaining $h \cdot n$ input bits (uncoded bits) are grouped in $h$-tuples and passed through a scalar ASK Gray mapper with $2^h$ levels (module T3). The $n$ outputs are stacked into an $n$-vector, $\mathbf{v} \in \mathcal{V}^n$, where we defined:

$$\mathcal{V} = \{2i\text{-}2^h + 1 \text{ with } i = 0,1,...,2^h\text{-}1\}.$$

Finally, output symbols are obtained as $\mathbf{s} = 2\,\mathbf{v} + \mathbf{p} \in \mathcal{L}$ (module T4). We note that, in the proposed architecture, each vector $\mathbf{p}$ identifies univocally a subset, being its barycenter. For this reason, in the following, we shall identify each subset with the corresponding $n$-vector selected by the output of the BCC encoder, denoting both, with slight abuse of notation, by the same letter $\mathbf{p}$. We further remark that the code-word dimensionality coincides with the dimension of the output of the (punctured) BCC encoder, $n$.

*Performance of hyper-cubic TCM*

Before introducing the decoder, we are interested in assessing the performance of a such a family of multidimensional codes by evaluating its ACG as a function of $h$ and $n$. The performance of a TCM scheme is characterized by two main parameters: the minimum Euclidean distance among points in the same subset ($\delta_\parallel$) and the minimum Euclidean distance between output signals whose state transition paths divert from and rejoin to a common state of the encoder after two or more state transitions ($\delta_T$). In a TCM code, we call free distance, ($\delta_{free}$, the minimum of $\delta_\parallel$ and $\delta_T$. At SNR levels of practical interest, errors mainly occur when receiver confuses two closest signals. The quantity $\delta_T$ affects the probability for the receiver of confusing constellation subsets belonging to close state transition paths, while the quantity $\delta_\parallel$ determines the probability of confusing two close symbols in the same subset. The higher is the free distance the better is the performance of the code. The CFM of a TCM scheme is thus $\delta^2_{free}/(2\,E_d^{TCM})$ where $E_d^{TCM}$ represents the average energy per real dimension of the transmitted codes.

With respect to an ASK uniform constellation of $M = 2^b$ levels, (with b bits per symbols), the average energy, when $\delta_{min} = 2$, results $E_d = (M^2\text{-}1)/3$. For a two-dimensional squared constellation the CFM, thus, results $\delta^2_{min}/(2\,E_d) = 6/(M^2\text{-}1) = 6/(2^{2b}\text{-}1)$ (see Forney G. D. Jr., Wei, L.-F., *op. cit.*).

As regards the proposed hyper-cubic constellation, the number of uniform levels per dimensions is $2^{h+1}$, and the resulting energy per dimension is, thus, $E_d^{TCM} = (2^{2(h+1)}\text{-}1)/3$, where the minimum Euclidean distance among points is 2. In order to obtain the CFM of the proposed hyper-cubic TCM scheme, we need to compute $\delta_{free}$ and thus $\delta_T$ and $\delta_\parallel$. Recalling that $\mathbf{s} = 2\,\mathbf{v} + \mathbf{p}$, trivially we have $\delta_\parallel = 4$, as the distances among $\mathbf{s}$'s in a given subset are twice the distances among their corresponding v's in $\mathcal{V}^n$, where the minimum of those distances is 2 by construction of $\mathcal{V}$. As concerns $\delta_T$, due to the lattice symmetry, it is easy to see that the minimum distance among s's belonging to different subsets corresponds exactly to the minimum distance among their associated $\mathbf{p}$'s. We note that a difference of a single bit in different $\mathbf{p}$'s leads to a difference of 4 in $\delta^2_T$, thus, we get $\delta^2_T = 4\,\delta_H$ where $\delta_H$ is the Hamming free distance of the underlying (possibly punctured) BCC.

Puncturing consists in periodically erasing selected coded bits at the output of the BCC encoder in order to achieve an higher coding rate at the cost of lower Hamming free distances. By basing the design of encoder and decoder on a fixed parent BCC ($n_p$, 1, $K_p$) the resulting coding rate can be changed by choosing different suitable puncturing matrices.

In order to achieve the best CFM allowed to the proposed hyper-cubic TCM, we require $\delta^2_T \geq \delta^2_\parallel$ and, hence, an Hamming free distance of the resulting punctured BCC equal or greater than four, ($\delta_H \geq 4$).

In order to maximize channel efficiency, under condition $\delta_H \geq 4$, we focus on punctured codes such that $k = n$-1. We note that the Hamming free distance of the punctured code increases with the constraint length, $K_p$, of the parent code at rate $1/n_p$. Punctured codes from a rate 1/2 parent BCC have been studied by a number of authors. We find that, having required $\delta_H \geq 4$ for the punctured code, BCC's (2,1,7) allow puncturing with coding rates up to 5/6, BCC's (2,1,8) allow coding rate up to 7/8 and BCC's (2,1,9) permit coding rates up to 13/14, (see e.g. Yasuda Y., Kashiki K., Hirata Y., "High-Rate Punctured Convolutional Codes for Soft Decision Viterbi Decoding", *IEEE Transactions on Communications,* vol. 32, n. 3, pp. 315-319, March 1984).

The squared free distance ($\delta^2_{free}$ of the hyper-cubic TCM, provided that $\delta_H \geq 4$, results thus equal to $\delta^2_\parallel = 16$, and hence its CFM results $\delta^2_{free} / (2\,E_d^{TCM}) = 24 / (2^{2(h+1)}\text{-}1)$. The number of useful bits transmitted per real dimension results $h + k/n = h + (n-1)/n$. In order to assess the ACG we compare the CFM of the proposed modulation, with the one of an equivalent ideal squared modulation with $b = h + (n-1)/n$. We have thus:

$$ACG = \frac{24\,(2^{2(h+(n-1)/n)} - 1)}{(2^{2(h+1)} - 1)\,6} \approx \frac{4}{\sqrt[n]{4}} \tag{1}$$

that, for large $n$, tends to 4 (i.e. 6dB). As anticipated, ACG increases with the code-word dimensionality. The maximum code-word dimensionality depends on the maximum rate of the punctured code such that $\delta_H \geq 4$. By way of example, for $h > 1$, if we use as parent code the BCC (2,1,7) with octal generator (133,171), the maximum code-word dimensionality, n, results equal to 6 with a corresponding ACG of about 5dB, the parent code BCC (2,1,8) with octal generator (247,371) allows n = 10 with ACG of about 5.4 dB while the parent code BCC (2,1,9) with octal generator (561,753) allows n = 14 with ACG of about 5.6 dB (see Yasuda Y. *et al., op. cit.,* for the corresponding puncturing patterns). ACG's closer to the 6dB bound can be achieved by resorting to parent BCC's with higher initial $\delta_H$, e.g. with larger constraint length or with lower coding-rates (1/3 and 1/4). Unfortunately, marginal ACG increments tend to decrease for large dimension of the code-words.

*Hyper-cubic TCM decoder*

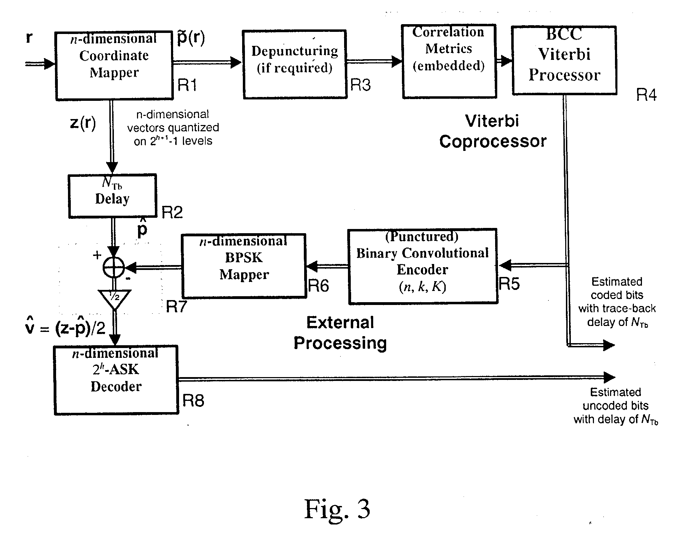

Let us now illustrate the proposed decoding architecture for hyper-cubic TCM. Referring to Fig. 3, the decoder receives an n-vector of noisy real symbols, $\mathbf{r} = (r_1,...,r_i,...,r_n)$. The channel is modelled as AWGN, thus we have $\mathbf{r} = \mathbf{s}_{tx} + \mathbf{w}$, where $\mathbf{w} = (w_1,...,w_i,...,w_n)$ is a real-valued *n*-vector of gaussian noise and $\mathbf{s}_{tx} = 2\,\mathbf{v}_{tx} + \mathbf{p}_{tx} \in S^n$ is the transmitted *n*-dimensional symbol received at current time. We denoted by $\mathbf{p}_{tx}$ the *n*-vector determined by the BCC encoder (module T2) and by $\mathbf{v}_{tx}$ the *n*-vector determined by the uncoded bits at the transmitter (module T3).

Module R1 is a coordinate mapper, with two key functions:

1. The first is to produce an *n*-vector, $\tilde{\mathbf{p}}$, such that the (depunctured) correlation metrics computed by the subsequent processing (modules R3 and R4) be in monotonic relation with the optimal branch metrics of an ideal TCM Viterbi decoder for each received $\mathbf{r}$;

2. The second function is to quantize components $r_i$ of $\mathbf{r}$ on $2^{h+1}-1$ levels. If $Z = \{2j-2^{h+1}+2$ with $j = 0,1,...,2^{h+1}-2\}$ is the set of the $2^{h+1}-1$ middle points between adjacent elements of $S$, module R1 replaces each $r_i$ by $z_i$, its closest element in $Z$. In output, the $z_i$'s are stacked in *n*-vectors, $\mathbf{z}$.

We note that $\mathbf{z}$ would be sufficient to decide the correct $h \cdot n$-tuple of uncoded bits, provided that the decoder were aware of the subset $\mathbf{p}_{tx}$. Said $\mathbf{\hat{p}}$ the estimated subset, when $\mathbf{\hat{p}} = \mathbf{p}_{tx}$ and

$$\max_{i=1,...,n}|w_i| < 2 = \delta_{\text{free}}/2,$$

for each component $\hat{v}_i$ of vector $\mathbf{\hat{v}} = (\mathbf{z} - \mathbf{\hat{p}})/2$, we prove that $|v_i^{tx} - \hat{v}_i| < 2$, which is a sufficient condition for correct decisions. Hence, module R8 can retrieve the $h \cdot n$ uncoded bits by applying $n$ times a $2^h$-ASK demapper to $\hat{v}_i$'s.

By definition of $z_i$, when $|w_i| < 2$, it is easy to see that $|s_i^{tx} - z_i| = 1$. As $s_i^{tx} = 2\,v_i^{tx} + p_i^{tx}$, with $s_i^{tx}$ and $p_i^{tx}$ as *i*-th components of $\mathbf{s}_{tx}$ and $\mathbf{p}_{tx,}$ we have

$$\left|v_i^{tx} + \left(p_i^{tx} - z_i\right)/2\right| = 1/2,$$

which, expressed as $\left|v_i^{tx} - \hat{v}_i\right| = 1/2$, proves the assert.

When an *i* such that $|w_i| \geq 2 = \delta_{\parallel}/2 = \delta_{\text{free}}/2$ exists, errors can occur also in the optimal decoder, as $\mathbf{r}$ can cross the boundary between decision regions, thus, overcoming error correcting capabilities of the TCM code.

Now, the decoding problem has moved into generating a reliable estimate, say $\{\mathbf{\hat{p}}(i)\}_i$, of the sequence of subsets used in transmission, or, equivalently, of the sequence of transmitted *k*-tuples of coded bits. Actually, the two sequences correspond univocally and the decoder, having estimated the latter, can derive the former by re-encoding. In our architecture, the sequence of transmitted k-tuples of coded bits is estimated by the BCC VCP (module R4) and re-encoding is performed by modules R5 and R6.

We thus introduce the ML decoding for the subset estimation, recollecting some standard theory of TCM decoding. For a transmission of $L$ symbols, the Viterbi algorithm minimizes the Euclidean distance (path metric) between the received sequence of n-vectors $\{\mathbf{r}(i)\}_{i=0,...,L-1}$, and the output symbols of the TCM encoder, $\{\mathbf{s}(i)\}_{i=0,...,L-1}$, for any allowed path of state transitions $S_{path} = \{\sigma_0, \sigma_1, ...., \sigma_L\}$ (where we denoted by $\sigma_i$ the encoder state at time $i$) and any input sequence of $h \cdot n$-tuple of uncoded bits. Given a path of state transitions $S_{path}$, its metric is decomposed in the sum of the terms corresponding to each single state transition (branch metrics). At the transmitter, at time $i$, the TCM encoder selects a subset depending on the state transition $\sigma_i \rightarrow \sigma_{i+1}$. We denote by $\mathbf{p}(\sigma_{i+1}, \sigma_i) \in \mathcal{P}$ such a subset. At time $i$, the choice of a point in a given subset $\mathbf{p}$ depends only on the $h \cdot n$-tuple of uncoded bits at the input of module T3 and thus on $\mathbf{v}(i)$. Hence, given $\mathbf{p}$, each branch metric can be minimized on all $2^{h \cdot n}$ allowed $\mathbf{v} \in \mathcal{V}^n$ independently on the $k$-tuple of coded bits. For this reason, the $i$-th branch metric, represented by the Euclidean distance between $\mathbf{r}$ ($i$) and $\mathbf{s}(i) = 2 \mathbf{v}(i) + \mathbf{p}(\sigma_{i+1}, \sigma_i)$, is found to be:

$$D_{\mathbf{p}}(\mathbf{r}) = \min_{\mathbf{v} \in V^n} \left\| \mathbf{r} - (2\mathbf{v} + \mathbf{p}) \right\|^2 , \qquad (2)$$

while the Viterbi decoder selects the path of state transitions $S_{path}$ by minimizing the path metric:

$$\hat{S}_{path} = \arg \min_{S_{path}} \sum_{\substack{i = 0; \ \sigma_i \in S_{path}}}^{L-1} D_{\mathbf{p}(\sigma_{i+1}, \sigma_i)}(\mathbf{r}(i)) . \qquad (3)$$

By simple algebra, it is possible to see that minimization (3) corresponds to the maximization:

$$\hat{S}_{path} = \arg \max_{S_{path}} \sum_{\substack{i = 0; \ \sigma_i \in S_{path}}}^{L-1} C_{\mathbf{p}(\sigma_{i+1}, \sigma_i)}(\mathbf{r}(i)) \qquad (4)$$

where we defined the branch correlation metrics as:

$$C_{\mathbf{p}}(\mathbf{r}) = \frac{\mathbf{r} \cdot \mathbf{p}}{2} + \max_{\mathbf{v} \in V^n} \left[ (\mathbf{r} - \mathbf{p} - \mathbf{v}) \cdot \mathbf{v} \right] \qquad (5)$$

and where "." represents the inner product between real n-vectors. We have in facts, for any $\mathbf{p}$ and $\mathbf{r}$, that 4 $C_{\mathbf{p}}$ (r) = $c$ - $D_{\mathbf{p}}(\mathbf{r})$, where $c$ is a constant independent on $\mathbf{p}$. Hence, a monotonic relation between the two path metrics exists and the Viterbi algorithm can be indifferently based on the most convenient of the two without performance loss.

Let us now focus on the architecture of the decoder of the invention. Owing to the choice of a BCC VCP, the branch metrics computed by cascade of modules R3 and R4 are in the shape of the correlation metrics:

$$\chi_{\mathbf{p}}(\tilde{\mathbf{p}}) = \tilde{\mathbf{p}} \cdot \mathbf{p} \qquad (6)$$

where

$$\tilde{\mathbf{p}} = (\tilde{p}_1, ..., \tilde{p}_i, ..., \tilde{p}_n)$$

is the input of the depuncturing module R3 and $\mathbf{p}$ represents any allowed binary code-word belonging to BCC. Before discussing the nature of the mapping rule for generating $\tilde{\mathbf{p}}$ (module R1), we need briefly to comment the decoding process for punctured BCC's. It appears that a direct ideal ML decoder for punctured BCC would require a Viterbi algorithm based on a suitable periodically time varying trellis of states and on branch metrics computed by correlating

the input, $\tilde{\mathbf{p}}$, with ideal code-words from the punctured BCC. Depuncturing (performed by module R3) consists in inserting zeros in the received code-words in the positions where the encoder (module T1) erased binary symbols during puncturing. It is possible to prove that the direct ideal periodically time varying Viterbi decoder is equivalent to the standard Viterbi algorithm for the parent BCC ($n_p$, 1, $K_p$), where branch metrics are obtained by correlating the depunctured input with the code-words of the parent BCC across a suitable number (usually $k$) of trellis steps (see e. g. J. B. Cain, G. C. Clark, Jr., J. M. Geist, "Punctured Convolutional Codes of Rate (n - 1)/n and Simplified Maximum Likelihood Decoding", *IEEE Trans. Inform. Theory,* vol. IT-25, n. 1, pp. 97-100, January 1979 and Yasuda Y. *et al., op. cit.).* For this reason, in the following, we neglect puncturing and depuncturing, referring to the cascade of modules R3 and R4 as to a binary Viterbi decoder adapted to the BCC implemented in module T1. It is obvious that, when puncturing is absent, module R3 is not required.

Now, the decoding problem consists in generating a suitable input, say $\tilde{\mathbf{p}}$ (**r**), for the equivalent binary Viterbi decoder (modules R3/R4), such that branch metrics (6) be in monotonic relation with branch metrics (5). Such a task is accomplished by module R1 according to the algorithm detailed in the following.

For each constellation dimension, we observe that $S$, depending on the value of $p_i$, splits into two disjoint interlaced sets. In particular, we have $S = S_A \cup S_B$ where:

$$S_A = \{4j - 2^{h+1} + 1 \text{ with } j = 0,1,\ldots,2^h - 1\} \text{ for } s_i\text{'s with } p_i = -1,$$

$$S_B = \{4j - 2^{h+1} + 3 \text{ with } j = 0,1,\ldots,2^h - 1\} \text{ for } s_i\text{'s with } p_i = 1.$$

We put:

$$s_{A\,max} = \max\{S_A\} = 2^{h+1} - 3; \qquad s_{A\,min} = \min\{S_A\} = -2^{h+1} + 1;$$

$$s_{B\,max} = \max\{S_B\} = 2^{h+1} - 1; \qquad s_{B\,min} = \min\{S_B\} = -2^{h+1} + 3.$$

With respect to the *i*-th component of the received symbol, $r_i$, we have four distinguished possibilities:

    1. $s_{B\,max} < r_i$, i.e. $r_i$ falls outside the constellation,
    2. $s_A < r_i \le s_B$ for the adjacent constellation coordinates $s_A \in S_A$, $s_B \in S_B$ with $|s_A - s_B| = 2$,
    3. $s_B < r_i \le s_A$ for the adjacent constellation coordinates $s_A \in S_A$, $s_B \in S_B$ with $|s_A - s_B| = 2$,
    4. $r_i \le s_{A\,min}$, i.e. $r_i$ falls outside the constellation.

Module R1 determines the interval of values of $S$ in which each component $r_i$ of **r** falls (e.g. by bitwise shift and Boolean operations on $r_i$). For each component $r_i$ and in accordance with the above cases, R1 performs one of the following couple of actions:

    1. $z_i \leftarrow (s_A \, max + s_B \, max)/2 \,; \tilde{p}_i \leftarrow r_i - z_i$
    2. $z_i \leftarrow (s_A + s_B)/2 \,; \tilde{p}_i \leftarrow r_i - z_i$
    3. $z_i \leftarrow (s_A + s_B)/2 \,; \tilde{p}_i \leftarrow z_i - r_i$
    4. $z_i \leftarrow (s_A \, min + s_B \, min)/2 \,; \tilde{p}_i \leftarrow r_i - z_i$

where $\leftarrow$ denotes assignment and where (when needed) $S_A$ and $S_B$ are determined in the search. We denote by $\tilde{\mathbf{p}}$ (**r**) = $(\tilde{p}_1(r_1),\ldots,\tilde{p}_i(r_i),\ldots,\tilde{p}_n(r_n))$ and $\mathbf{z}(\mathbf{r}) = (z_1(r_1),\ldots, z_i(r_i),\ldots, z_n(r_n))$ the *n*-vectors corresponding to the above mapping rule.

It is easy to verify that, when

$$\max_{i=1,\ldots,n}|w_i| < 2 = \delta_{free}/2,$$

we have:

$$2\,C_{\mathbf{p}}(\mathbf{r}) - \chi_{\mathbf{p}}(\widetilde{\mathbf{p}}(\mathbf{r})) = \mathbf{r}\cdot\mathbf{p} + 2\max_{\mathbf{v}\in V^n}\left[(\mathbf{r}-\mathbf{p}-\mathbf{v})\cdot\mathbf{v}\right] - \widetilde{\mathbf{p}}(\mathbf{r})\cdot\mathbf{p} = 2(\mathbf{r}-\mathbf{v}_{tx})\cdot\mathbf{v}_{tx} + 2\sum_{i=1}^{n}|w_i|q_i\,, \qquad (7)$$

where:

$q_i = 1$    if      $z_i(r_i)\,/2$ is even (i.e. $r_i$ falls in case 3.),
$q_i = 0$    if      $z_i(r_i)/2$ is odd (i.e. $r_i$ falls in case 1., 2. or 4.).

We note that the last term of (7) does not depend on **p.** Hence, branch metrics (5) and (6), in which $\widetilde{\mathbf{p}}(\mathbf{r})$ is obtained as above, are in monotonic relation and a Viterbi algorithm based on (6) (modules R3 and R4 in the proposed decoding scheme) offers the same performance of the optimal ML method based on (3). Thus, when the optimal decoder selects the subset correctly, the method of the invention will do the same. On the other hand, when an $i$ exists such that $|w_i| \geq 2 = \delta_T/2 = \delta_{free}/2$, errors can occur also in the conventional optimal decoder, as the received signal can cross the boundary between decision regions, thus, overcoming error correcting capabilities of the TCM code. Nevertheless, also in this case, it is possible to prove that branch metrics (5) and (6) still are in monotonic relation. Hence, a conventional optimal decoder would incur exactly the same errors of the proposed decoder in estimating the sequence of coded bits.

Finally, recollecting the decoder architecture, coded bits estimated by modules R3 and R4 are presented both in output to the TCM decoder and in input to modules R5 and R6. As anticipated, those modules reproduce, by re-encoding the estimated $k$-tuples, the estimated sequence of $n$-vectors $\{\hat{\mathbf{p}}(i)\}_i$ associated to the subsets in transmission. Owing to the trace-back, quantized vectors z and decoded subsets **p** are unaligned by a constant delay $N_{Tb}$. For this reason, the sequence of quantized symbols $\{\hat{\mathbf{z}}(i)\}_i$ is delayed by the memory module R2, before being combined with $\{\hat{\mathbf{p}}(i)\}_i$ by module R7. The latter performs the equation $\hat{\mathbf{v}}(i) = (\hat{\mathbf{z}}(i) - \hat{\mathbf{p}}(i))/2$, thus obtaining the sequence $\{\hat{\mathbf{v}}(i)\}_i$. As antic-ipated, each $\hat{\mathbf{v}}$ is decoded, element by element, by a $2^h$-ASK demapper (module R8),which, finally, provides the stream of uncoded $n\cdot h$-tuples.

While preferred embodiments of the invention have been disclosed above, several details may be changed within the scope of the invention by substituting equivalent arrangements or by dispensing with unessential functions. By way of example, trivially, the scaling by 2 in the encoder and the decoder (modules T4 and R7) might be embedded in the mapper and demapper (modules T3 and R8), or less trivially, thanks to equation (7), the BCC coder and decoder (modules T1, R5 and R3/R4) might be replaced by arbitrary binary coders and decoders with desired coding rate and Hamming distance (possibly $\geq 4$).

Furthermore, the mapper and demapper themselves (modules T3 and R8) could be replaced by arbitrary coders and decoders which associate $k^*$ bits to n-vectors with Euclidean distance $\delta^*_\| \geq 4$. This modification leads to a channel efficiency of $2(k + k^*)/n$ bit/sec/Hz and allows arbitrary $\delta_{free}$. In fact, now, this latter increases with $\delta^*_\|$ or $\delta_T$ by varying the error correction capabilities of module T3 (and consequently of module R8) or those of the binary code adopted in module T1 (and consequently in modules R5 and R3/R4). In this case the proposed decoder architecture falls in the broad class of suboptimal staged decoding. In fact, as equation (7) is based on equispaced ASK mapping, optimality of the subset estimation (and of the subsequent decoding) is no longer guaranteed. Nevertheless, when $\delta_T > \delta^*_\|$ it is possible to prove that, for high SNR, the decoder achieves its (new) theoretical ACG, while suffering, for low and moderate SNR's, a performance penalty due to an increased path multiplicity (see Calderbank A. R., "Multilevel Codes and Multistage Decoding", *IEEE Trans. on Communications,* vol. 37, n. 3, pp 222-229, March 1989). Other changes and modifications will occur to persons skilled in the art within the scope of the attached claims.

## Claims

**1.**   A method of encoding a sequence of information bits into a sequence of code-word vectors belonging to a constellation of vectors, said constellation being partitioned into a plurality of subsets, said subsets resulting translations of a parent sub-constellation, where, at each time interval, a subset of bits in a group of information bits is converted by binary convolutional encoding into a coded string of n bits, n being the dimension of said code-word vectors, and the coded string of bits and the remaining bits in said group are processed to generate one of said code-word vectors, **characterized in that** said processing comprises the following steps:

- mapping said coded string into an n-dimensional two-level vector corresponding to the barycenter of one of said subsets of said constellation of vectors;

- mapping said remaining bits into an n-dimensional displacement vector from said parent sub-constellation;

- adding said barycenter vector and said displacement vector to produce said code-word vector.

2. The method of encoding of claim 1, **characterized in that** said convolutional encoding includes a puncturing step.

3. The method of encoding of claim 2, **characterized in that** said binary convolutional encoding has rate 1/2.

4. The method of encoding of any of claims 1 to 3, **characterized in that** said parent sub-constellation is an hyper-cube comprising $2^{h \cdot n}$ points obtained by a vectorial ASK mapper with $2^h$ equispaced levels per component, where $h$ is an assigned integer.

5. Apparatus for decoding code-word vectors as obtained by the method of encoding of any of claims 1 to 4 after transmission through a noisy channel, **characterized in that** it comprises:

- a coordinate mapper for receiving said code-word vectors and for producing respective vectors of real values, which are approximations of the barycenter vectors of the constellation subsets to which belong said code-word vectors;

- a Viterbi decoder matched to the encoding used in transmission, connected to the output of the coordinate mapper, for producing estimations of said subsets of bits of said groups of information bits;

- a re-encoder comprising a convolutional encoder identical to the convolutional encoder used in transmission, connected to the output of the Viterbi decoder and a cascaded two-level mapper, to generate respective estimations of the transmitted coded barycenter vectors;

- an adder subtracting said estimated coded barycenter vectors from said respective received code-word vectors and to produce respective estimated displacement vectors;

- a parent sub-constellation decoder for converting said estimated displacement vectors into estimations of the remaining bits of said respective groups of information bits.

6. Apparatus for decoding code-word vectors as obtained by the method of encoding of claim 4, after transmission through a noisy channel **characterized in that** it comprises:

- a coordinate mapper for receiving said code-word vectors, for producing respective vectors of real values, which are approximations of the barycenter vectors of the constellation subsets to which belong said code-word vectors, and for producing respective scalarly quantized versions on $2^{h+1}$ - 1 levels of said code-word vectors;

- a Viterbi decoder matched to the encoding used in transmission, connected to the output of the coordinate mapper, for producing estimations of said subsets of bits of said groups of information bits from said approximations of said barycenter vectors;

- a re-encoder comprising a convolutional encoder identical to the convolutional encoder used in transmission, connected to the output of the Viterbi decoder and a cascaded two-level mapper, to generate respective estimations of the transmitted coded barycenter vectors;

- an adder for subtracting said estimated coded barycenter vectors from the respective quantized versions of said code-word vectors to produce respective estimated displacement vectors;

- a parent sub-constellation decoder for converting said estimated displacement vectors into estimations of the remaining bits of said respective groups of information bits.

7. Apparatus of claim 5 or 6, insofar as depending on claim 4, **characterized in that** said parent sub-constellation decoder is a vectorial ASK decoder.

8. Apparatus of any of claims 5 to 7, **characterized in that** said Viterbi decoder includes a depuncturing function and said re-encoder includes a puncturing function.

9. Apparatus of claim 8, **characterized in that** said Viterbi decoder is for rate 1/2.

10. Apparatus of claim 5 or 6, **characterized in that** said coordinate mapper performs the following actions with respect to each component of said code-word vectors:

- determining the closest of the middle points between two adjacent scalar levels of the respective component of said constellation of code-words;

- subtracting said middle point from said code-word component when the greater of the adjacent scalar levels associated to said middle point corresponds to the greater of the two levels used for barycenter mapping, or subtracting said code-word component from said middle point when the greater of said adjacent scalar levels corresponds to the smaller of said two levels used for barycenter mapping.

## Fig. 1 (prior art)

Binary Convolutional Encoder $(n, k, K)$

$k$ bits

$n$ bits

Subset Selector

choose among $2^n$ subsets

$h$ bits

Symbol Selector

one of $2^{n+h}$ signal points

**Coding Block**

**Mapper**

## Fig. 2

(Punctured) Binary Convolutional Encoder $(n, k, K)$ T1

$k$ bits

$n$ bits

$n$-dimensional BPSK Mapper T2

**p**

choose among $2^n$ subsets

$h \cdot n$ uncoded bits

$n$-dimensional $2^h$-ASK Gray Mapper T3

**v**

choose among $2^{h \cdot n}$ points

2

T4

$\oplus$

**s** $= 2 \cdot$**v**$+$**p**

output one among $2^{n \cdot (h+1)}$ signal points

**Coding Block**

**Mapper**

**r** → | *n*-dimensional Coordinate Mapper | R1 → $\tilde{p}(r)$ → | Depuncturing (if required) | R3 → | Correlation Metrics (embedded) | → | BCC Viterbi Processor | R4

**z(r)** — n-dimensional vectors quantized on $2^{h+1}$-1 levels

**Viterbi Coprocessor**

$N_{Tb}$ Delay | R2

$\hat{p}$

+ / − ⊕ → ½ → | *n*-dimensional BPSK Mapper | R6 ← | (Punctured) Binary Convolutional Encoder $(n, k, K)$ | R5

$\hat{v} = (z - \hat{p})/2$ | R7

**External Processing**

Estimated coded bits with trace-back delay of $N_{Tb}$

| *n*-dimensional $2^h$-ASK Decoder | R8

Estimated uncoded bits with delay of $N_{Tb}$

# Fig. 3

13

**European Patent Office**

**EUROPEAN SEARCH REPORT**

Application Number

EP 03 42 5059

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | FORNEY G D ET AL: "MULTIDIMENSIONAL CONSTELLATIONS - PART I: INTRODUCTION, FIGURES OF MERIT, AND GENERALIZED CROSS CONSTELLATIONS" IEEE JOURNAL ON SELECTED AREAS IN COMMUNICATIONS, IEEE INC. NEW YORK, US, vol. 7, no. 6, 1 August 1989 (1989-08-01), pages 877-892, XP000048613 ISSN: 0733-8716 * abstract * * section II-D * * figures 1,2 * | 1-10 | H04L27/18 H04L1/00 |
| A | KATZ E ET AL: "Systematic trellis-coded modulation" VEHICULAR TECHNOLOGY CONFERENCE, 1994 IEEE 44TH STOCKHOLM, SWEDEN 8-10 JUNE 1994, NEW YORK, NY, USA,IEEE, 8 June 1994 (1994-06-08), pages 972-976, XP010123220 ISBN: 0-7803-1927-3 * abstract * * section III * * figure 2 * | 1-10 | |
| A | EP 0 624 018 A (AT & T CORP) 9 November 1994 (1994-11-09) * abstract * * column 1, line 40 - column 2, line 14 * * figure 1 * | 1-10 | TECHNICAL FIELDS SEARCHED (Int.Cl.7) H04L |

The present search report has been drawn up for all claims

| Place of search | Date of completion of the search | Examiner |
|---|---|---|
| MUNICH | 26 June 2003 | HORSTMANNSHOFF, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 42 5059

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2003

| Patent document cited in search report | | Publication date | Patent family member(s) | | Publication date |
|---|---|---|---|---|---|
| EP 0624018 | A | 09-11-1994 | US | 5548615 A | 20-08-1996 |
| | | | CA | 2118991 A1 | 04-11-1994 |
| | | | DE | 69424972 D1 | 27-07-2000 |
| | | | DE | 69424972 T2 | 15-02-2001 |
| | | | EP | 0624018 A1 | 09-11-1994 |
| | | | JP | 3078448 B2 | 21-08-2000 |
| | | | JP | 6350661 A | 22-12-1994 |

EPO FORM P0459

For more details about this annex : see Official Journal of the European Patent Office, No. 12/82